# EUROPÄISCHE PATENTSCHRIFT

(11) **EP 1 247 440 B1**
(45) Veröffentlichungstag und Bekanntmachung des Hinweises auf die Patenterteilung: **06.04.2005**
(21) Anmeldenummer: 02003006.0
(22) Anmeldetag: 12.02.2002
(51) Int. Cl.: A01D 45/02

(54) **Erntemaschine für stengelartiges Erntegut**
Harvester for stalk plants
Appareil de moissonnage pour plantes à tiges

(30) Priorität: 04.04.2001 DE 10116675
(43) Veröffentlichungstag der Anmeldung: 09.10.2002
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Overmeyer, Bernward, Dipl.-Ing., 49497 Mettingen (DE); Keller, Alfons, Dipl.-Ing., 49497 Mettingen (DE)
(74) Vertreter: Pott, Ulrich

(56) Entgegenhaltungen:
- DE-A- 3 909 754
- DE-C- 19 933 778
- US-A- 4 622 804
- US-A- 5 546 737

## Beschreibung

Die Erfindung bezieht sich auf eine Erntemaschine zum Ernten von Mais und dgl. stengelartigem Erntegut in einer Ausbildung nach dem Oberbegriff des Patentanspruches 1.

Aus der DE 33 24 899 C2 ist eine Erntemaschine bekannt, bei der zur Abtrennung der Halme des Erntegutes in eine Laschenkette eingehängte Werkzeuge vorgesehen sind. Die Laschenkette ist weiterhin mit eingehängten Haltemitteln zur Förderung der abgetrennten Halme versehen. Diese werden der Eintrittsöffnung eines Häckslers oder dgl. zugeführt. Dazu ist zwischen zwei gegensinnig angetriebenen Endlosketten ein Zuführbereich vorgesehen, in dem auch eine Umlenkung der Ketten vollzogen wird. Im Bereich dieser Umlenkung werden die aufgenommenen Halme zugeführt, wodurch sich ein erheblicher Erntegutabfall in diesem Bereich einstellt. Dementsprechend ist die Gefahr vorhanden, daß das Erntegut nicht vollständig durch den Häcksler oder dgl. geführt wird, sondern sich vor dieser Eintrittsöffnung aufbaut. Des weiteren bleibt während des gesamten Umlaufs des Förderers Erntegut an Mitnehmern der Kette hängen, insbesondere Blätter oder dgl. langfaserige Anteile, wodurch die Gefahr besteht, daß sich die Transportfunktion der Mitnehmer während der Dauer des Einsatzes verschlechtert.

Es ist weiterhin eine Erntemaschine der eingangs genannten Art bekannt, bei der in der Schneidebene z.B. als hakenförmige Messer ausgebildete Förder- und Führungselemente des Endlosförderers vorgesehen sind, die mit einem Schneidmesser zusammenarbeiten. Dieses Schneidmesser kann fest an einem Erntemaschinenrahmenteil angebracht sein. Alternativ ist es jedoch auch möglich, anstelle eines festen Messers rotierende Schneidscheiben oder oszillatorisch bewegte Messer in Betracht zu ziehen, die entweder im freien Schnitt oder im Zusammenwirken mit den Messern der Förder- und Führungselemente des Endlosförderers zusammenarbeiten. Das Schneidmesser ist mit einer durchgehenden Schneidkante versehen, so daß jedem Halte- bzw. Schneidelement ein entsprechender Messerbereich zugeordnet ist. Das kann im Betrieb dazu führen, daß bei einer solchen Gestaltung das Abschneiden des Erntegutes, z.B. eines Maisstengels, immer an derselben Stelle der Messerbereiche des Schneidmessers erfolgt, so daß an diesen Stellen verstärkt Abnutzungen die Folge sind. Ebenfalls treten in diesen Bereichen verstärkt Verschmutzungen auf.

Es ist Aufgabe der vorliegenden Erfindung, eine Erntemaschine der eingangs genannten Art dahingehend weiterzubilden, daß erhöhten Abnutzungserscheinungen an den Schneidmessern entgegenzuwirken ist. Desweiteren soll die Erntemaschine verbesserte Reinigungseigenschaften aufweisen.

Zur Lösung dieser Aufgabe zeichnet sich die Erntemaschine der eingangs genannten Art durch die im kennzeichnenden Teil des Anspruchs 1 angegebenen Merkmale aus. Hinsichtlich weiterer vorteilhafter Ausgestaltungen wird auf die Ansprüche 2 bis 12 verwiesen.

Wesentlicher Vorteil der Erntemaschine nach der vorliegenden Erfindung ist, daß durch das stufenförmig mit Absätzen ausgebildete Schneidmesser dessen Standzeit wesentlich zu erhöhen ist. Dies gilt auch für die mit dem Schneidmesser zusammenwirkenden Förder- und Führungselemente des Endlosförderers. Durch die stufenförmig ausgebildeten Schneidsegmente, d.h. eine Aneinanderreihung von jeweiligen Schneidkantensegmenten mit in Laufrichtung schräg nach außen verlaufenden Schneidkantenbereichen, kann auf der gesamten Länge der jeweiligen Schneidkante bzw. auf der Länge der mit dieser Schneidkante zusammenwirkenden Kante des Förder- und Führungselementes des Endlosförderers das Erntegut abgeschnitten werden. Im Gegensatz zu herkömmlichen Erntemaschinen mit durchgehender Schneidkante des Schneidmessers erfolgt das Abschneiden z.B. des Stengels nicht immer an der gleichen Stelle, so daß starke Abnutzungen an dieser Stelle vermieden sind. Des weiteren weist die Erntemaschine nach der Erfindung wesentlich verbesserte Reinigungseigenschaften im Bereich der Schneidebene auf, was insbesondere dadurch bedingt ist, daß untere Enden von Erntegutresten, die zwischen den Förder- und Führungselementen und dem Schneidmesser eingeklemmt sind, beim Überfahren der Stufe der Schneidmessersegmente freigegeben werden und entweder abgeschnitten werden oder herunterfallen.

Es wurde gefunden, daß die Schneidleistung und auch die angestrebte verbesserte Reinigungswirkung insbesondere dann zu optimieren ist, wenn der Winkel β der Schneidkante eines Schneidsegmentes zu einer Basislinie, die die Fahrtrichtungslängsachse orthogonal schneidet und/oder tangential zu einer Umlaufbahn des Endlosförderers ausgerichtet ist, kleiner ist als der Winkel α des schrägzulaufenden Bereiches des Förder- und Führungselementes. Vorzugsweise beträgt der Winkel β etwa ½ α.

Bei herkömmlichen Erntemaschinen ist die Teilung T, also das Abstandsmaß von Anlenkpunkten von zwei benachbarten Förder- und Führungselementen des Endlosförderers, derart, daß ein als Gegenmesser ausgebildetes Ende der Förder- und Führungselemente pro Teilung T vorgesehen ist. Das entspricht einer übereinstimmenden Teilung. Bevorzugtermaßen ist es bei der Erntemaschine nach der Erfindung so, daß die Anzahl der Gegenmesser so gewählt ist, daß auf einer Strecke von zwei Teilungen T der Förder- und Führungselemente des Endlosförderers zumindest drei als Gegenmesser ausgebildete Enden der Förder- und Führungselemente vorgesehen sind, was bedeutet, daß auf zwei Teilungen T der Förder- und Führungselemente zumindest drei Bereiche zur Aufnahme von stengelartigem Erntegut kommen. Damit ist auch ein sicheres Abschneiden des Erntegutes bei höheren Fahrgeschwindigkeiten ermöglicht.

Die stufenförmige Ausbildung der Schneidsegmente des Schneidmessers ist derart, daß diese schräg nach vorne in Laufrichtung der Förder- und Führungselemente über die gesamte Breite eines Schneidsegmentes verläuft und dann abrupt, d.h. parallel zur Fahrtrichtungslängsachse wieder auf ein Anfangsmaß der Schneidkante des vorhergehenden Schneidsegmentes zurückfällt, so daß die angestrebte Freigabe nach Durchlaufen eines Schneidsegmentes für das Erntegut ermöglicht ist. Die Schneidkante kann mit oder ohne Wellenschliff ausgebildet sein.

Es können insgesamt pro Schneidsegment Einzelmesser z.B. am Erntemaschinenrahmen angebracht sein. Darüber hinaus ist es jedoch auch möglich, z.B. ein Messer mit zwei Schneidsegmenten oder mehr vorzusehen.

Weitere Vorteile und Einzelheiten der Erfindung ergeben sich aus der nachfolgenden Beschreibung und der Zeichnung. In der Zeichnung zeigt:
- Fig. 1: eine perspektivische Ansicht eines Ausführungsbeispiels der erfindungsgemäßen Erntemaschine mit zwei in einem Vorsatzgerät gegeneinander umlaufenden Endlosförderern;
- Fig. 2 und 3: perspektivische Vorderansichten von Teilausschnitten des Vorsatzgerätes,
- Fig. 4: eine Draufsicht auf einen Teilbereich des Vorsatzbereiches, wobei von dem Endlosförderer nur die unterste, den Schneidmessern benachbarte Ebene dargestellt ist,
- Fig. 5: eine Draufsicht auf ein zwei Schneidsegmente aufweisendes Messer.

Die im einzelnen nicht näher dargestellte Erntemaschine soll als Selbstfahrer ausgebildet sein und umfaßt ein Vorsatzgerät 1, das mittels zweier als Gliederketten ausgebildeter Endlosförderer 2 und 3 das Erntegut abschneidet und aufnimmt und einer im mittleren Bereich zwischen den Endlosförderern 2 und 3 gelegenen Eintrittsöffnung 4 einer im einzelnen nicht sichtbaren nachgeordneten Weiterbearbeitungseinrichtung, beispielsweise einem Häcksler, zuführt.

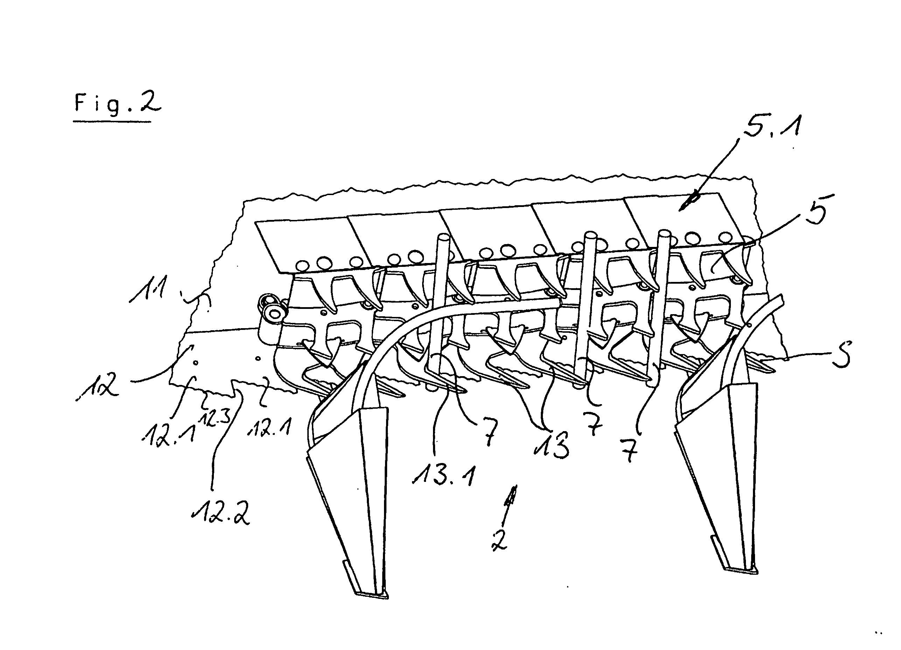

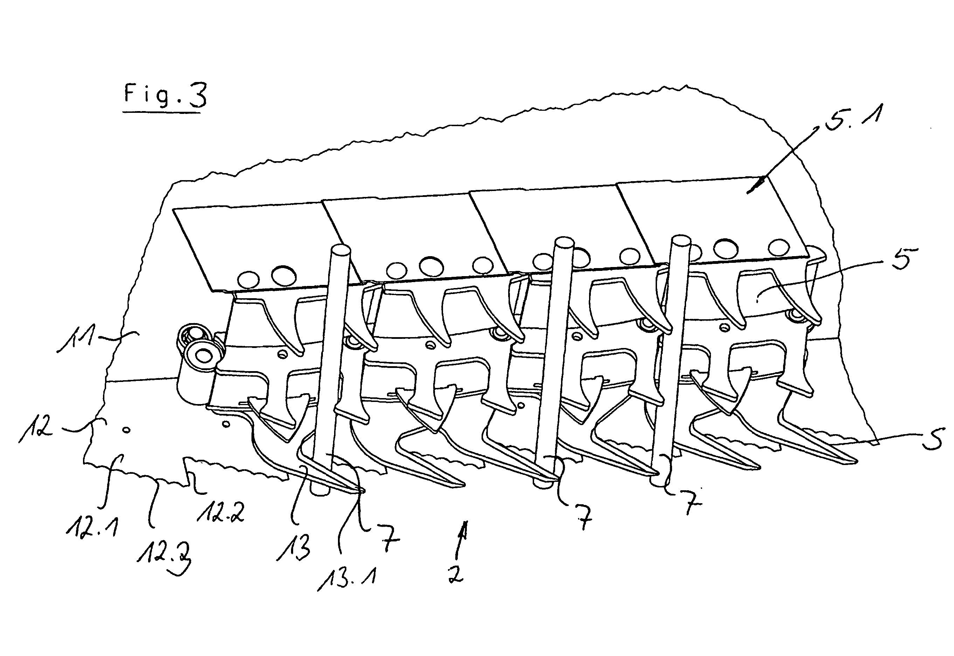

Die als Gliederketten 5 ausgebildeten Endlosförderer 2 und 3 sind gegensinnig antreibbar und laufen in Richtung zur Mitte des Vorsatzgerätes 1, um das geschnittene Erntegut der Zuführöffnung 4 zuzuführen. Durch die quer zur Fahrtrichtung F ausgebildeten Arbeitstrums 5.1 kann ein Erntegutstreifen mit einer Vielzahl von nebeneinander angeordneten Pflanzenreihen abgeschnitten werden. Die Erntemaschine kann auch reihenunabhängig eingesetzt werden. Bei der dargestellten Ausführungsform der Erntemaschine mit zwei Endlosförderern ist im mittleren Bereich eine Teilerspitze 6 vorgesehen, die den Zuführungsbereich teilt und eine Abweisung von mittleren Erntegutreihen hin zu den seitlichen Gliederketten 5 bewirkt. Die Gliederketten 5 erfüllen dabei einerseits die Funktion, Halme (sh. Fig. 2 und 3) von den Wurzeln abzutrennen, und andererseits, diese zur Eintrittsöffnung 4 der Weiterverarbeitungseinrichtung zu befördern. Die Endlosförderer 2 und 3 bzw. die Gliederketten 5 sind in Rahmen 8 und 9 gehalten, wobei diese insgesamt um in etwa parallel zur Fahrtrichtungslängsachse F liegende Schwenkachsen mittels Tragrahmen verschwenkbar sind, wodurch diese aus einer horizontalen Betriebsstellung in eine im wesentlichen vertikale Transportstellung für eine Straßenfahrt verschwenkbar sind.

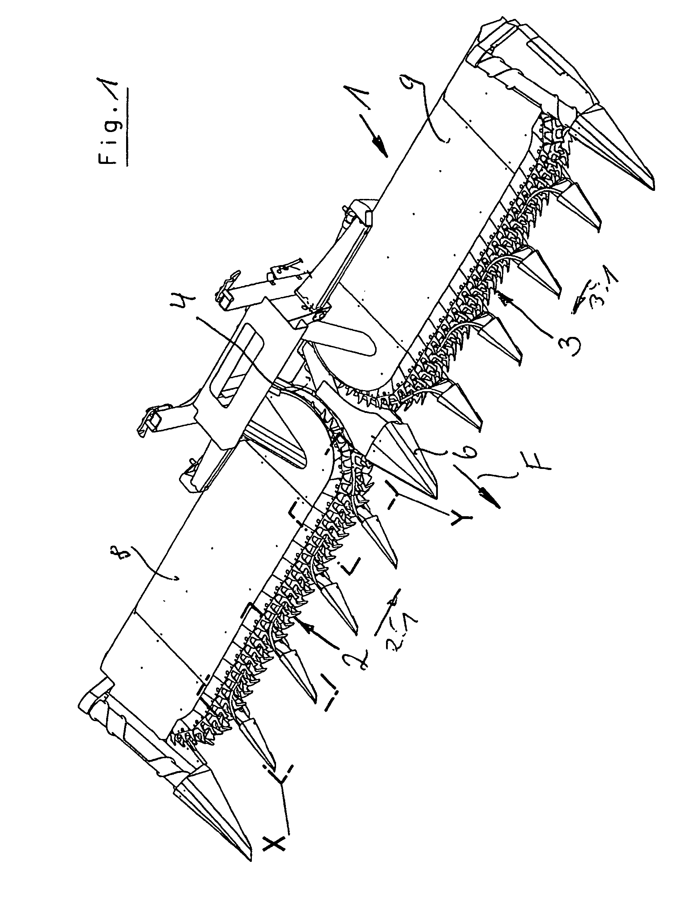

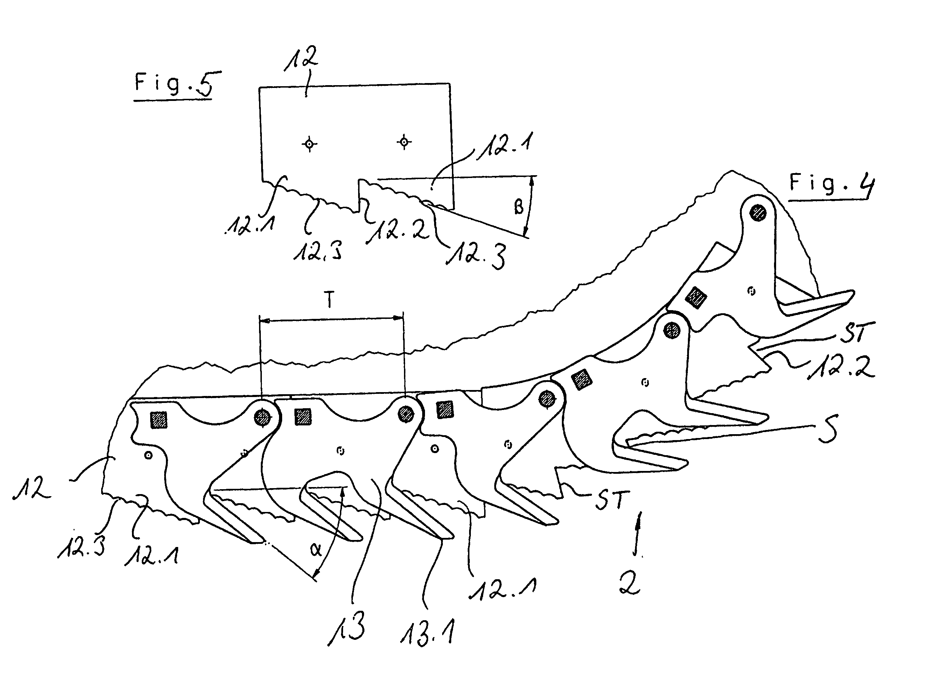

Die Gliederketten 5 haben Kettenglieder, die jeweils als einheitliche Funktionseinheiten ausgebildet sind und in ihrem unteren Bereich fest am Erntemaschinenrahmen 11 befestigte Schneidmesser 12 aufweisen. Diese Schneidmesser 12 sind unterhalb von Förder- und Führungselementen 13 ausgebildet, mit denen die Schneidmesser 12 eine Schneidebene S bilden. Die Förder- und Führungselemente 13 können ebenfalls als Schneidmittel ausgebildet sein und haben nach Art eines Gegenmessers schräg nach vorn ausgerichtete Enden 13.1, wobei diese Enden einen Winkel α zu einer Orthogonalen aufweisen (Fig. 4) und zwar zu einer Orthogonalen zur Fahrtrichtungslängsachse F (Fig. 1), so daß die Bezugslinie diese Fahrtrichtungsachse F unter einem rechten Winkel schneidet. Die Förder- und Führungselemente 13 weisen zueinander ein Teilungsmaß T auf (Fig. 4), das durch vordere Befestigungselemente von zwei benachbarten Führungs- und Förderelementen 13 bestimmt ist. Das Schneidmesser 12 insgesamt ist stufenförmig ausgebildet und hat Schneidsegmente 12.1 mit zwischen zwei benachbarten Schneidsegmenten 12.1 gelegenem Versatzmaß bzw. Absatz 12.2. Jedes Schneidsegment 12.1 hat eine in Laufrichtung der Förder- und Führungselemente 13 schräg nach vorn zulaufende Schneidkante 12.3, die in dem gezeigten Ausführungsbeispiel mit einem Wellenschliff versehen ist. Durch den Absatz 12.2 bzw. das Versatzmaß 12.2 ist eine Schneidsegmentstufe ST ausgebildet, die sich von der Spitze der schräg zulaufenden Schneidkante 12.3 bis zur Ausgangsbasis der nächstfolgenden Schneidkante 12.3 erstreckt.

Die Schneidkante 12.3 erstreckt sich mithin über die Breite eines Schneidsegmentes 12.1, wobei die Schneidbreite von zwei benachbarten Schneidsegmenten 12.1 größer ist als das Teilungsmaß T der Förder- und Führungselemente 13 (Fig. 4).

Als Schneidmesser 12 können Einzelmesser vorgesehen sein, die jeweils ein Schneidsegment ausbilden. Es ist aber auch möglich, wie beispielsweise in Fig. 5 dargestellt, daß ein Einzelschneidmesser 12 zwei oder mehr Schneidsegmente 12.1 aufweist. Die schräg nach vorne zulaufenden Schneidsegmente bzw. deren Schneidkanten 12.3 schließen einen Winkel β wiederum zur Orthogonalen zur Fahrtrichtungsachse F ein. Dieser Winkel β ist kleiner als der Winkel α der Förder- und Führungselemente, bevorzugt ist dieser Winkel β etwa halb so groß wie der Winkel α der Förder- und Führungselemente 13.

Um insbesondere auch ein sicheres Abschneiden von Erntegut bei höheren Fahrgeschwindigkeiten zu ermöglichen ist vorgesehen, daß für zwei Teilungen T der Förder- und Führungselemente 13 zumindest drei Enden 13.1 vorgesehen sind.

Insgesamt ist damit eine Erntemaschine geschaffen, die sehr gute Standzeiten aufweist und die eine verbesserte Reinigungswirkung hat. Durch die stufenförmig ausgebildete Schneidebene (Aneinanderreihung der jeweiligen Schneidkanten mit dazwischengelegener Schneidsegmentstufe ST) kann auf der gesamten Länge der Schneidkanten 12.3 bzw. auf der Länge der mit den Schneidkanten 12.3 zusammenwirkenden Bereiche der Förder- und Führungselemente 13 das Erntegut abgeschnitten werden. Daraus ergibt sich eine höhere Standzeit sowohl der Schneidmesser 12 als auch der Förder- und Führungselemente 13.

## Patentansprüche

1. Erntemaschine zum Ernten von Mais oder dgl. stengelartigem Erntegut, wobei die Erntemaschine zumindest einen umlaufenden Endlosförderer (2,3) für aufgenommenes Erntegut (7) umfaßt, der einen Zuführungsbereich (4) des Erntegutes (7) zu einer Eintrittsöffnung einer Weiterverarbeitungseinrichtung, insbesondere eines Häckslers, ausbildet, wobei der Endlosförderer (2,3) eine untere auswärts weisende Förder- und Führungselemente (13) sowie zumindest ein unterhalb der Förder- und Führungselemente (13) vorgesehenes Schneidmesser (12) umfassende Schneidebene (S) für das Erntegut (7) aufweist, **dadurch gekennzeichnet, daß** das Schneidmesser (12) in Laufrichtung (2.1,3.1) der Förder- und Führungselemente (13) gesehen, in Bezug zu einer Umlaufbahn der Förder- und Führungselemente (13) schräg nach außen verlaufende Schneidsegmente (12.1) mit Schneidkanten (12.3) hat, wobei zwischen zwei benachbarten Schneidsegmenten (12.1) eine Schneidsegmentstufe (ST) in Form eines Absatzes (12.2.) ausgebildet ist.

2. Erntemaschine nach Anspruch 1, **dadurch gekennzeichnet, daß** sich die Schneidkante (12.3) eines Schneidsegmentes (12.1) im wesentlichen über dessen Gesamtbreite erstreckt.

3. Erntemaschine nach Anspruch 1 oder 2, **dadurch gekennzeichnet**, da**ß** die Gesamtbreite eines Schneidsegmentes (12.1) im wesentlichen einem ganzzahlingen Teiler eines Normabstandes zwischen Reihen von normiert angebautem Emtegut entspricht.

4. Erntemaschine nach einem der Ansprüche 1 bis 3, **dadurch gekennzeichnet, daß** das Schneidmesser (12) in Laufrichtung (2.1, 3.1) der Förder- und Führungselemente (13) gesehen, unter einem Winkel (β) zur Orthogonalen der Fahrtrichtungslängsachse (F) und/oder zu einer Tangente der Umlaufbahn der Förder- und Führungselemente (13) schräg nach außen verlaufende Schneidsegmente (12.1) hat.

5. Erntemaschine nach einem der Ansprüche 1 bis 4, **dadurch gekennzeichnet, daß** die Enden der Förder- und Führungselemente (13) unter einem Winkel (α) zu einer Orthogonalen der Fahrtrichtungslängsachse (F) und/oder zu einer Tangente an die Umlaufbahn des Endlosförderer (2,3) ausgerichtet sind.

6. Erntemaschine nach einem der Ansprüch 1 bis 5, **dadurch gekennzeichnet, daß** der Winkel (β) der Schneidsegmente (12.1) kleiner ist als der Winkel (α) der Förder- und Führungselemente (13).

7. Erntemaschine nach Anspruch 6, **dadurch gekennzeichnet, daß** der Winkel (β) der Schneidsegmente (12.1) etwa halb so groß ist wie der Winkel (α) der Förder- und Führungselemente (13).

8. Erntemaschine nach einem der Ansprüche 1 bis 7, **dadurch gekennzeichnet, daß** die Schneidkanten (12.3) der Schneidsegmente (12.1) mit einem Wellenschliff versehen sind.

9. Erntemaschine nach einem der Ansprüche 1 bis 8, **dadurch gekennzeichnet**, da**ß** der Absatz (12.2) zwischen zwei benachbarten Schneidsegmenten (12.1) ein Höhenmaß von 10% bis 50% einer Schneidsegmentbreite hat.

10. Erntemaschine nach einem der Ansprüche 1 bis 9, **dadurch gekennzeichnet, daß** ein Absatz (12.2) zwischen zwei benachbarten Schneidsegmenten parallel zur Fahrtrichtungslängsachse (F) verläuft.

11. Erntemaschine nach einem der Ansprüche 1 bis 10, **dadurch gekennzeichnet, daß** die Förder- und Führungselemente (13) als Gegenmesser ausgebildete Enden (13.1) aufweisen.

12. Erntemaschine nach einem der Ansprüche 1 bis 11, **dadurch gekennzeichnet**, da**ß** zwei Teilungen (T) von benachbarten Förder- und Führungselemente (13) zumindest drei als Gegenmesser ausgebildete Enden (13.1) zugeordnet sind.

## Claims

1. Harvester for harvesting maize or the like stalked crops for harvesting, the harvester comprising at least one circulating endless conveyor (2, 3) for crop for harvesting (7) which is picked up, said endless conveyor (2, 3) forming an infeed region (4) for the crop for harvesting (7) to an inlet opening of a means for further processing, in particular a crop chopper, the endless conveyor (2, 3) having a cutting plane (S) for the crop for harvesting (7) which comprises bottom outward-pointing feeding and guiding members (13) and at least one cutting blade (12) provided below the feeding and guiding members (13), **characterised in that**, looking in the direction of movement (2.1,3.1) of the feeding and guiding members (13), the cutting blade (12) has cutting segments (12.1) having cutting edges (12.3), which cutting segments (12.1) extend obliquely outwards relative to a path along which the feeding and guiding members (13) circulate, a cutting segment step (ST) in the form of a shoulder (12.2) being formed between two adjacent cutting segments (12.1).

2. Harvester according to claim 1, **characterised in that** the cutting edge (12.3) of a cutting segment (12.1) extends for substantially its full width.

3. Harvester according to claim 1 or 2, **characterised in that** the full width of a cutting segment (12.1) is substantially equal to a whole-number divisor of a standard distance between rows of crops for harvesting grown under standardised conditions.

4. Harvester according to one of claims 1 to 3, **characterised in that**, looking in the direction of movement (2.1, 3.1) of the feeding and guiding members (13), the cutting blade (12) has cutting segments (12.1) which extend obliquely outwards at an angle (β) to a line orthogonal to the longitudinal axis (F) defining the direction of travel and/or to a tangent to the path along with the feeding and guiding members (13) circulate.

5. Harvester according to one of claims 1 to 4, **characterised in that** the ends of the feeding and guiding members (13) are aligned at an angle (α) to a line orthogonal to the longitudinal axis (F) defining the direction of travel and/or to a tangent to the path along which the endless conveyor (2, 3) circulates.

6. Harvester according to one of claims 1 to 5, **characterised in that** the angle (β) of the cutting segments (12.1) is smaller than the angle (α) of the feeding and guiding members (13).

7. Harvester according to claim 6, **characterised in that** the angle (β) of the cutting segments (12.1) is approximately half as large as the angle (α) of the feeding and guiding members (13).

8. Harvester according to one of claims 1 to 7, **characterised in that** the cutting edges (12.3) of the cutting segments (12.1) are ground in waves.

9. Harvester according to one of claims 1 to 8, **characterised in that** the height of the shoulder (12.2) between two adjacent cutting segments (12.1) is 10% to 50% of the width of a cutting segment.

10. Harvester according to one of claims 1 to 9, **characterised in that** a shoulder (12.2) between two adjacent cutting segments extends parallel to the longitudinal axis (F) defining the direction of travel.

11. Harvester according to one of claims 1 to 10, **characterised in that** the feeding and guiding members (13) have ends (13.1) which take the form of companion blades.

12. Harvester according to one of claims 1 to 11, **characterised in that** two pitch intervals (T) of adjacent feeding and guiding members (13) have at least three ends (13.1) in the form of companion blades assigned to them.

## Revendications

1. Récolteuse pour récolter du maïs ou un produit de récolte similaire à tige, la récolteuse comprenant au moins un transporteur sans fin (2,3) rotatif pour le produit de récolte (7) reçu, lequel transporteur sans fin (2,3) forme une zone d'alimentation (4) en produit de récolte (7) pour un orifice d'admission (4) d'un dispositif de transformation ultérieure, en particulier un hacheur, et présente un plan de coupe (S) inférieur indiquant vers l'extérieur et comportant des éléments de transport et de guidage (13) ainsi qu'au moins un couteau de coupe (12) prévu en dessous des éléments de transport et de guidage (13), pour le produit de récolte (7), **caractérisée en ce que** le couteau de coupe (12) vu dans le sens de marche (2.1,3.1) des éléments de transport et de guidage (13), présente des segments de coupe (12.1) s'étendant de façon oblique vers l'extérieur par rapport à une trajectoire rotative des éléments de transport et de guidage (13) et comportant des arêtes de coupe (12.3), un étage de segments de coupe (ST) étant formé comme talon (12.2) entre deux segments de coupe (12.1) voisins.

2. Récolteuse selon la revendication 1, **caractérisée en ce que** l'arête de coupe (12.3) d'un segment de coupe (12.1) s'étend essentiellement sur la largeur totale de celui-ci.

3. Récolteuse selon la revendication 1 ou 2, **caractérisée en ce que** la largeur totale d'un segment de coupe (12.1) correspond essentiellement à un diviseur à nombre entier d'une distance normalisée entre des rangées de produit de récolte cultivé selon les normes.

4. Récolteuse selon l'une quelconque des revendications 1 à 3, **caractérisée en ce que** le couteau de coupe (12) vu dans le sens de marche (2.1,3.1) des éléments de transport et de guidage (13), présente des segments de coupe (12.1) s'étendant de façon oblique vers l'extérieur sous un angle (β) par rapport à l'orthogonale sur l'axe longitudinal du sens de déplacement (F) et/ou par rapport à une tangente à la trajectoire rotative des éléments de transport et de guidage (13).

5. Récolteuse selon l'une quelconque des revendications 1 à 4, **caractérisée en ce que** les extrémités des éléments de transport et de guidage (13) sont orientées sous un angle (α) par rapport à une orthogonale sur l'axe longitudinal du sens de déplacement (F) et/ou par rapport à une tangente à la trajectoire rotative du transporteur sans fin (2,3).

6. Récolteuse selon l'une quelconque des revendications 1 à 5, **caractérisée en ce que** l'angle (β) des segments de coupe (12.1) est plus petit que l'angle (α) des éléments de transport et de guidage (13).

7. Récolteuse selon la revendication 6, **caractérisée en ce que** la grandeur de l'angle (β) des segments de coupe (12.1) est environ la moitié de celle de l'angle (α) des éléments de transport et de guidage (13).

8. Récolteuse selon l'une quelconque des revendications 1 à 7, **caractérisée en ce que** les arêtes de coupe (12.3) des segments de coupe (12.1) sont pourvues d'une rectification en forme d'onde.

9. Récolteuse selon l'une quelconque des revendications 1 à 8, **caractérisée en ce que** le talon (12.2) entre deux segments de coupe voisins présente une mesure de hauteur de 10 % à 50 % d'une largeur de segment de coupe.

10. Récolteuse selon l'une quelconque des revendications 1 à 9, **caractérisée en ce qu'**un talon (12.2) entre deux segments de coupe voisins s'étend parallèlement à l'axe longitudinal du sens de déplacement (F).

11. Récolteuse selon l'une quelconque des revendications 1 à 10, **caractérisée en ce que** les éléments de transport et de guidage (13) présente des extrémités (13.1) conformées en contre-couteaux

12. Récolteuse selon l'une quelconque des revendications 1 à 11, **caractérisée en ce qu'**à deux pas (T) d'éléments de transport de guidage (13) voisins sont associées au moins trois extrémités (13.1) conformées en contre-couteaux.
